(19)

Europäisches Patentamt

European Patent Office

Office européen des brevets

(11) **EP 4 629 379 A1**

(12) **EUROPEAN PATENT APPLICATION**
published in accordance with Art. 153(4) EPC

(43) Date of publication:
08.10.2025 Bulletin 2025/41

(21) Application number: 24843557.0

(22) Date of filing: 19.07.2024

(51) International Patent Classification (IPC):
$H01M\ 10/0525^{(2010.01)}$    $H01M\ 10/0587^{(2010.01)}$
$H01M\ 4/525^{(2010.01)}$    $H01M\ 4/38^{(2006.01)}$
$H01M\ 4/583^{(2010.01)}$    $H01M\ 4/36^{(2006.01)}$

(52) Cooperative Patent Classification (CPC):
Y02E 60/10; Y02P 70/50

(86) International application number:
PCT/KR2024/010489

(87) International publication number:
WO 2025/018845 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.07.2023 KR 20230093983
18.07.2024 KR 20240095334

(71) Applicant: LG Energy Solution, Ltd.
Seoul 07335 (KR)

(72) Inventors:
• SHIN, Won Kyung
Daejeon 34122 (KR)

• KO, Hyeon Min
Daejeon 34122 (KR)
• PARK, Ji Young
Daejeon 34122 (KR)
• KIM, Jung Jin
Daejeon 34122 (KR)
• KIM, Dae Kyun
Daejeon 34122 (KR)
• KIM, Byung Ju
Daejeon 34122 (KR)
• CHOI, Yeon Jun
Daejeon 34122 (KR)

(74) Representative: Goddar, Heinz J.
Boehmert & Boehmert
Anwaltspartnerschaft mbB
Pettenkoferstrasse 22
80336 München (DE)

(54) **CYLINDRICAL LITHIUM SECONDARY BATTERY**

(57) The present disclosure provides a lithium secondary battery including a battery case; an electrode assembly accommodated in the battery case; and an electrolyte, wherein the electrode assembly includes a positive electrode including a positive electrode active material, a separator, and a negative electrode including a negative electrode active material, and the electrolyte includes $LiPF_6$ as a lithium salt, and ethylene carbonate as an organic solvent, wherein the lithium secondary battery has a ratio (form factor ratio) of a diameter (r) to a height (h) of the battery case of 0.4 or more, and satisfies a condition of Equation (1):

[Equation (1)]

$$5.6 \leq \frac{\frac{h}{r}}{\frac{W_{LiPF6}}{W_{EC}} \times W_{EL}} \times 100 \leq 8.6$$

(In Equation (1), h is the height (mm) of the battery case, r is the diameter (mm) of the battery case, $W_{LiPF6}$ is an amount of the $LiPF_6$ which is expressed as a percentage (%) relative to a total weight of the electrolyte, $W_{EC}$ is an amount of the ethylene carbonate which is expressed as a percentage (%) relative to the total weight of the electrolyte, and $W_{EL}$ denotes the total weight (g) of the electrolyte included in the lithium secondary battery)

WINDING DIRECTION

11  10  12

Z

X

FIG.1

**Description**

**TECHNICAL FIELD**

Technical Field

The present disclosure relates to a lithium secondary battery, and more particularly, to a cylindrical-type lithium secondary battery having improved high-temperature durability and long-term life characteristics.

Cross-reference to Related Applications

This application claims priority from Korean Patent Application Nos. 10-2023-0093983, filed on July 19, 2023, and 10-2024-0095334, filed on July 18, 2024, the disclosures of which are incorporated by reference herein.

**BACKGROUND ART**

Demand for lithium secondary batteries as an energy source has been significantly increased with technological advances in electric vehicles and portable electronic devices.

The lithium secondary battery may be classified into cylindrical-type, prismatic-type, and pouch-type batteries depending on a shape of a battery case, wherein, after a jelly-roll-type electrode assembly, which is prepared by sequentially stacking sheet-shaped positive electrode, separator, and negative electrode and then winding it in one direction, is accommodated in a cylindrical battery case, the cylindrical-type battery among them is formed in a sealed form by covering an upper portion of the battery case with a cap plate. The positive electrode and the negative electrode are provided with strip-shaped positive electrode tab and negative electrode tab, respectively, and the positive electrode tab and the negative electrode tab are respectively connected to electrode terminals to be electrically connected to an external power source. For reference, the positive electrode terminal is the cap plate, and the negative electrode terminal is the battery case. However, with respect to a conventional cylindrical-type battery having such a structure, since a current is concentrated on the strip-shaped electrode tabs, there are problems in that resistance is high, a lot of heat is generated, and current collection efficiency is poor.

However, the resistance and heat generation were not major issues for small-sized cylindrical-type secondary batteries with a form factor of 18650 (cylindrical-type secondary battery with a diameter of 18 mm × a height of 65 mm) or 21700 (cylindrical-type secondary battery with a diameter of 21 mm × a height of 70 mm) which were mainly used in the past.

However, in recent years, as electric vehicles are required to have increased driving ranges and faster charging rates, development and use of a large-sized cylindrical-type secondary battery represented by a larger form factor, for example, 46800 (cylindrical-type secondary battery with a diameter of 46 mm × a height of 80 mm), are being considered. Also, in order to improve rapid charging characteristics of this large-sized cylindrical-type secondary battery, a so-called tab-less cylindrical-type secondary battery is being proposed in which current collectors themselves of non-coating portions of the positive electrode and the negative electrode are utilized as electrode tabs instead of using the separate strip-shaped electrode tabs.

The large-sized cylindrical-type secondary battery having a tab-less structure may not only exhibit relatively large capacity characteristics and energy density, but also has an advantage of increasing production efficiency of the cylindrical-type secondary battery for an electric vehicle and reducing its production unit price. Also, since the tab-less structure is used to increase an electrical connection (contact) area between the electrode tab and the electrode terminal and reduce a movement distance of electrons while the number of parts is reduced, output characteristics are improved and heat generated during charge and discharge processes may also be dispersed.

However, with respect to the large-sized cylindrical-type secondary battery using the tab-less structure, since a process of pressing a portion where an active material layer was not coated was performed in order to provide sufficient weldability with the case and a terminal portion, the electrolyte did not move properly due to blocking of an electrolyte movement path between the positive electrode, the separator, and the negative electrode in the wound electrode assembly, and thus, there was a problem in that electrolyte wetting is reduced.

Accordingly, there is an urgent need to develop a technique which may improve overall performance by improving the electrolyte wetting in the large-sized cylindrical-type secondary battery that is applicable to medium and large-sized devices such as automobiles.

**DISCLOSURE OF THE INVENTION**

## TECHNICAL PROBLEM

An aspect of the present disclosure relates to a lithium secondary battery which may achieve excellent high-temperature durability and cycle characteristics by adjusting composition and amount of an electrolyte according to a dimension of the large-sized lithium secondary battery using a tab-less structure to establish optimal electrolyte wetting conditions.

## TECHNICAL SOLUTION

According to an embodiment, the present disclosure provides a lithium secondary battery including a battery case; an electrode assembly accommodated in the battery case; and an electrolyte,

wherein the electrode assembly includes a positive electrode including a positive electrode active material, a separator, and a negative electrode including a negative electrode active material, and
the electrolyte includes $LiPF_6$ as a lithium salt, and ethylene carbonate as an organic solvent,
wherein the lithium secondary battery has a ratio (form factor ratio) of a diameter (r) to a height (h) of the battery case of 0.4 or more, and satisfies a condition of Equation (1):

$$[\text{Equation (1)}]$$

$$5.6 \leq \frac{\frac{h}{r}}{\frac{W_{LiPF6}}{W_{EC}} \times W_{EL}} \times 100 \leq 8.6$$

(In Equation (1), h is the height (mm) of the battery case,

r is the diameter (mm) of the battery case,
$W_{LiPF6}$ is an amount of the $LiPF_6$ which is expressed as a percentage (%) relative to a total weight of the electrolyte,
$W_{EC}$ is an amount of the ethylene carbonate which is expressed as a percentage (%) relative to the total weight of the electrolyte, and
$W_{EL}$ denotes the total weight (g) of the electrolyte included in the lithium secondary battery)

The lithium secondary battery includes a non-coating portion in which an active material layer is not formed on at least a portion of the positive electrode and the negative electrode, and may be a battery having a tab-less structure in which the non-coating portion of the positive electrode or the non-coating portion of the negative electrode is defined as an electrode tab.
The positive electrode active material is a lithium transition metal oxide containing nickel (Ni) and cobalt (Co), wherein the lithium transition metal oxide may satisfy Equation (2).

$$\text{Equation (2):}$$

$$18 \leq X_{Ni}/X_{Co} \leq 48$$

(In Equation (2), $X_{Ni}$ is a mole% of Ni among total metals excluding lithium in the lithium transition metal oxide, and $X_{Co}$ is a mole% of Co among the total metals excluding lithium in the lithium transition metal oxide.)

## ADVANTAGEOUS EFFECTS

As in a lithium secondary battery according to the present disclosure, in a case in which composition and amount of an electrolyte satisfy a specific condition according to a dimension of a battery cell and a compositional ratio of nickel (Ni) to cobalt (Co), which are included in a positive electrode active material, satisfies a specific condition, since optimal electrolyte wetting conditions may be established and a side reaction at an interface between a positive electrode and the electrolyte may be minimized, excellent high-temperature durability and cycle characteristics may be achieved.

**BRIEF DESCRIPTION OF THE DRAWINGS**

FIG. 1 is a view illustrating a stacked state before winding of an electrode assembly according to the present disclosure.

FIG. 2 is a cross-sectional view illustrating a structure of an electrode plate of an electrode assembly according to an embodiment of the present disclosure.

FIG. 3 is a view for explaining a structure of an electrode assembly according to an example of the present disclosure.

FIG. 4 is a cross-sectional view illustrating a structure of a cylindrical-type battery having a tab-less structure according to an embodiment of the present disclosure.

FIG. 5 is a cross-sectional view illustrating a structure of a cylindrical-type battery having a tab-less structure according to another embodiment of the present disclosure.

FIG. 6 is a view for explaining a battery pack according to the present disclosure.

**MODE FOR CARRYING OUT THE INVENTION**

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

With respect to a conventional large-sized cylindrical-type lithium secondary battery using a tab-less structure, since electrolyte wetting is lower than that of a small battery, there is a disadvantage in that it is difficult to obtain desired performance with the same chemistry as the small battery. Particularly, in a case in which an amount of the electrolyte injected into a limited internal space of a cylindrical cell is increased when preparing the large-sized cylindrical-type secondary battery, an internal pressure is increased as an internal empty space is decreased, and, as a result, since a gaseous byproduct generated during formation is not discharged to the outside of an electrode assembly, but continuously remains inside the electrode assembly, a problem occurs in which the electrolyte is pushed out of the electrode assembly to reduce wetting. In contrast, if the internal empty space is increased due to a decrease in the amount of the electrolyte injected, since it is difficult for the electrolyte to be absorbed into the electrode assembly, the wetting is still reduced. As described above, the electrolyte wetting is closely related to cell resistance. That is, if the electrolyte is insufficient or the wetting is reduced, a problem of increased resistance occurs (Seong Jin An et al 2017 J. Electrochem. Soc. 2017, 164 A1195).

Thus, as a result of a significant amount of research conducted into improving performance of a large-sized cylindrical-type secondary battery, the present inventors have found that, in a case in which an appropriate amount of an electrolyte is injected, appropriate wetting may be secured to suppress an increase in initial resistance of a cell and improve rapid charge cycle characteristics, and for this purpose, have found a method capable of calculating the appropriate amount of the electrolyte injected, thereby leading to the completion of the present disclosure.

Hereinafter, a lithium secondary battery according to the present disclosure will be described in detail.

Specifically, the present disclosure provides a lithium secondary battery including a battery case; an electrode assembly accommodated in the battery case; and an electrolyte,

wherein the electrode assembly includes a positive electrode including a positive electrode active material, a separator, and a negative electrode including a negative electrode active material, and

the electrolyte includes $LiPF_6$ as a lithium salt, and ethylene carbonate as an organic solvent,

wherein the lithium secondary battery has a ratio (form factor ratio) of a diameter (r) to a height (h) of the battery case of 0.4 or more, and satisfies a condition of Equation (1) below:

[Equation (1)]

$$5.6 \leq \dfrac{\dfrac{h}{r}}{\dfrac{W_{LiPF_6}}{W_{EC}} \times W_{EL}} \times 100 \leq 8.6$$

(In Equation (1), h is the height (mm) of the battery case,

r is the diameter (mm) of the battery case,

$W_{LiPF6}$ is an amount of the $LiPF_6$ which is expressed as a percentage (%) relative to a total weight of the electrolyte,

$W_{EC}$ is an amount of the ethylene carbonate which is expressed as a percentage (%) relative to the total weight of the electrolyte, and

$W_{EL}$ denotes the total weight (g) of the electrolyte included in the lithium secondary battery)

Preferably, in Equation (1), $\dfrac{\frac{h}{r}}{\frac{W_{LiPF6}}{W_{EC}} \times W_{EL}} \times 100$ may be in a range of 5.65 to 8.6, and may more preferably be in a range of 6.5 to 8.6.

In a case in which a value of the $\dfrac{\frac{h}{r}}{\frac{W_{LiPF6}}{W_{EC}} \times W_{EL}} \times 100$ satisfies the above range, since optimal electrolyte wetting conditions may be established according to a dimension of a battery cell, performance of the secondary battery may be effectively improved.

The lithium secondary battery according to the present disclosure may be a cylindrical-type lithium secondary battery having a form factor ratio of 0.4 or more, preferably, 0.4 to 0.6.

In Equation (1), $W_{EL}$ is a total amount (g) of the electrolyte actually injected into the battery case, wherein it may vary depending on the dimension and size of the battery cell, but specifically, with respect to a cylindrical-type lithium secondary battery having a form factor ratio of 0.4 to 0.6, $W_{EL}$ is preferably about 30 g to 50 g.

Preferably, with respect to a cylindrical-type battery having a form factor ratio of 0.4 to 0.5, the $W_{EL}$ may be in a range of about 35 g to 50 g. Also, in a case in which the form factor ratio is greater than 0.5 and less than or equal to 0.6, the $W_{EL}$ may be in a range of about 30 g to 40 g. If the amount (g) ($W_{EL}$) of the electrolyte injected into the battery case is somewhat small, since the electrolyte wetting is reduced, it is difficult to achieve desired battery performance, and if the amount (g) ($W_{EL}$) of the electrolyte injected into the battery case is somewhat large, gas generation is intensified, and, as a result, explosion and electrolyte leakage may be caused.

In Equation (1), $W_{LiPF6}$ is the amount of the $LiPF_6$ which is expressed as a percentage (%) relative to the total weight of the electrolyte during preparation of the electrolyte, wherein viscosity of the electrolyte may be adjusted depending on the amount of the $LiPF_6$.

Specifically, when preparing an electrolyte applicable to the cylindrical-type lithium secondary battery having a form factor ratio of 0.4 to 0.6, the $W_{LiPF6}$ for example may be in a range of about 12 wt% to 16 wt%, preferably, 13 wt% to 16 wt%. If a value of the $W_{LiPF6}$ is somewhat small, since the viscosity of the electrolyte is low to have high fluidity, it is easy to inject the electrolyte into a large-capacity battery, but lithium ion conductivity may be decreased to degrade cycle characteristics. In contrast, if the value of the $W_{LiPF6}$ is somewhat large, since the fluidity decreases as the viscosity of the electrolyte is increased, the electrolyte wetting is deteriorated to degrade achievement of initial performance, and as a result, degradation of high-temperature durability and cycle characteristics may be caused.

In Equation (1), $W_{EC}$ is the amount of the ethylene carbonate which is expressed as a percentage (%) relative to the total weight of the electrolyte during the preparation of the electrolyte, wherein the viscosity of the electrolyte may be adjusted depending on the amount of the ethylene carbonate contained.

The ethylene carbonate is an organic solvent having excellent affinity with a carbon material, wherein it has been mainly used as a solvent for an electrolyte of a lithium secondary battery. However, in a case in which the electrolyte contains a somewhat large amount of the ethylene carbonate, since a large amount of $CO_2$ gas may be generated due to decomposition of the ethylene carbonate during charge and discharge, it may adversely affect the performance of the secondary battery. Furthermore, the ethylene carbonate is a high-melting-point solvent, wherein, if it is included in a somewhat large amount, since low-temperature characteristics are degraded and conductivity is low, there is a problem in that high-output characteristics are not only degraded, but the viscosity of the electrolyte is also increased. In contrast, if the electrolyte contains a somewhat small amount of the ethylene carbonate, since the electrical conductivity may be decreased, thermal stability and life performance may be degraded.

In a case in which the form factor ratio of the lithium secondary battery of the present disclosure is in a range of 0.4 to 0.6, it is desirable that the amount ($W_{EC}$) of the ethylene carbonate in the electrolyte is in a range of about 13 wt% to 25 wt%, preferably, 15 wt% to 20 wt%. In a case in which a value of the $W_{EC}$ satisfies the above range, the optimal electrolyte wetting conditions for a large-capacity cylindrical-type secondary battery may be established.

The high-temperature durability and cycle characteristics of the lithium secondary battery are closely related to the viscosity of the electrolyte. That is, in a case in which a high-viscosity electrolyte is injected into the large-capacity cylindrical-type lithium secondary battery having a form factor ratio of 0.4 or more, preferably, 0.4 to 0.6 as described above, since the wetting of the electrode assembly is reduced, there is a problem in that charge and discharge performance of the lithium secondary battery is significantly degraded or charge and discharge is not possible. In contrast, in a case in which a low-viscosity electrolyte is injected into the large-capacity battery, the wetting of the electrode assembly is improved, but there is a problem in that the charge and discharge performance of the lithium secondary battery is significantly degraded due to a low lithium salt concentration in the electrolyte.

In the present disclosure, since composition and amount of the electrolyte satisfy a specific condition, such as Equation (1) above, according to the dimension of the battery cell, the optimal electrolyte wetting conditions suitable for the large-capacity cylindrical-type lithium secondary battery may be established, and, as a result, a lithium secondary battery capable of exhibiting excellent high-temperature durability and cycle characteristics may be prepared. That is, since the wetting of the electrode assembly in the electrolyte may be improved while controlling an internal pressure of the cell by injecting an appropriate amount of the electrolyte containing optimal lithium salt ($LiPF_6$) and ethylene carbonate (EC) into a limited internal space of the cylindrical-type cell, an increase in resistance may be suppressed and high-temperature cycle characteristics may be significantly improved.

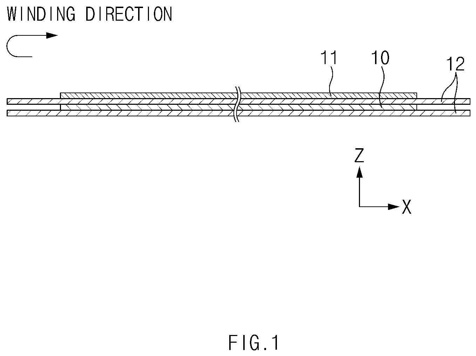

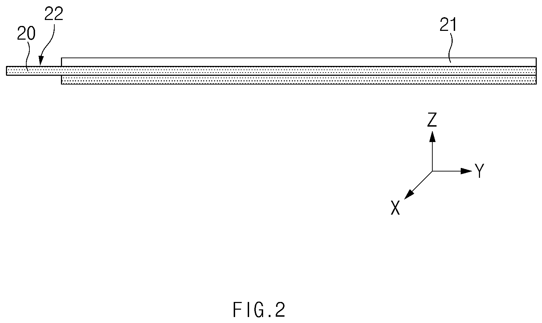

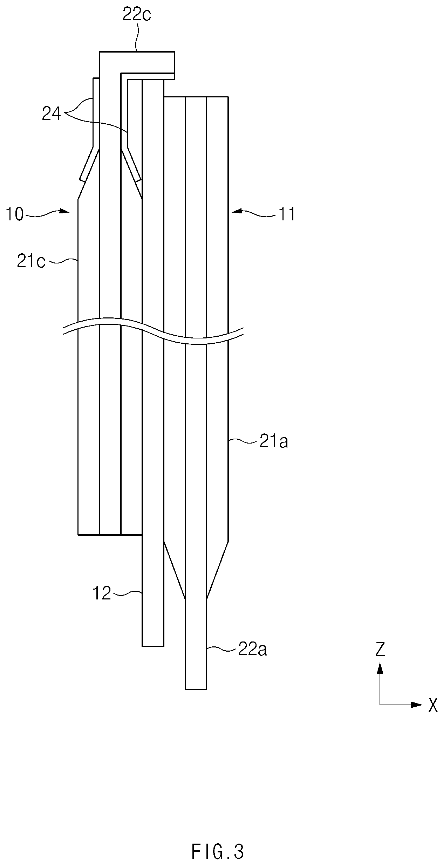

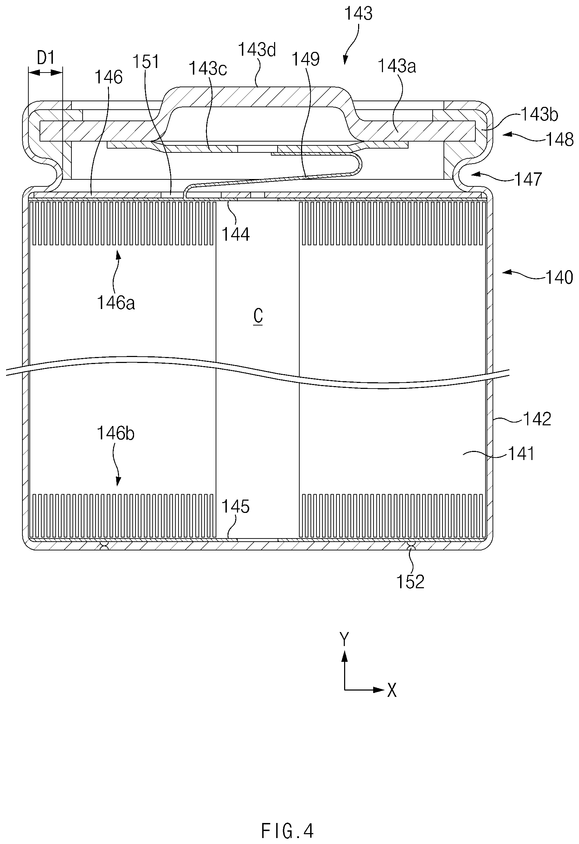

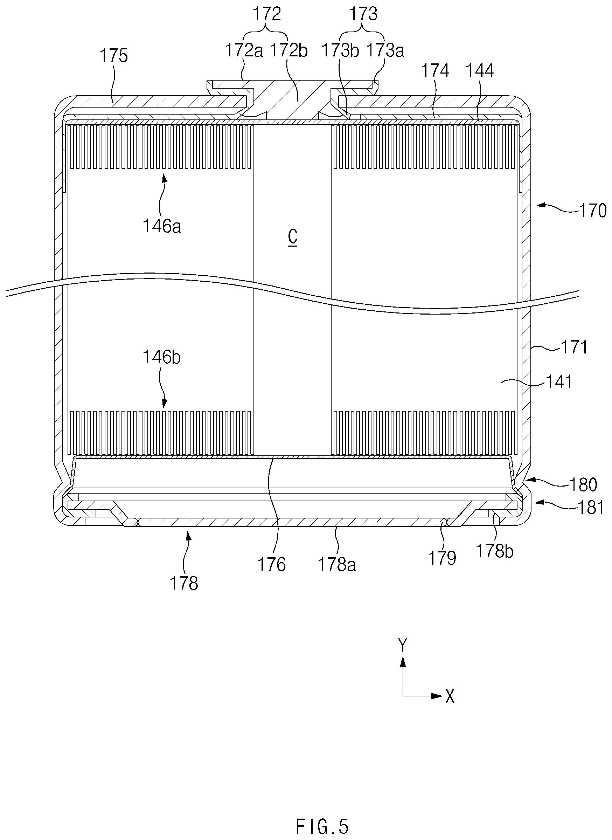

A stacked structure before winding of an electrode assembly according to the present disclosure is illustrated in FIG. 1, a cross-sectional structure of an electrode plate (positive electrode or negative electrode) according to the present disclosure is illustrated in FIG. 2, and a structure of the electrode assembly according to an example of the present disclosure is illustrated in FIG. 3. Also, a cross-sectional view of a cylindrical-type battery having a tab-less structure according to an embodiment of the present disclosure is illustrated in FIGS. 4 and 5. Hereinafter, each configuration of the cylindrical-type battery having a tab-less structure according to the present disclosure will be described in more detail with reference to the drawings.

**[Electrode Assembly]**

Referring to FIGS. 1 and 2, an electrode assembly A of the present disclosure may be prepared by winding a stack, which is formed by sequentially stacking a separator 12, a positive electrode 10, a separator 12, and a negative electrode 11 at least once in one direction X.

In this case, the positive electrode 10 and the negative electrode 11 each have a structure in which an active material layer 21 is formed on a long sheet-shaped current collector 20, and may include a non-coating portion 22 in which the active material layer 21 is not formed in a partial region of the current collector 20.

If the positive electrode 10 and the negative electrode 11, which include the non-coating portion 22 as described above, are used, a battery having a tap-less structure, in which a separate electrode tab is not included and at least a portion of the non-coating portions of the positive electrode 10 and the negative electrode 11 defines an electrode tab, may be achieved.

Specifically, the non-coating portion 22 may be formed long along the winding direction X on one side end of the current collector 20, and the battery having a tab-less structure may be achieved by bonding a current collecting plate to each of the non-coating portion of the positive electrode and the non-coating portion of the negative electrode and connecting the current collecting plate to an electrode terminal.

For example, a battery having a tab-less structure may be prepared through the following method. First, the separator, the positive electrode, the separator, and the negative electrode are sequentially stacked such that the non-coating portions 22 of the positive electrode 10 and the negative electrode 11 are disposed in opposite directions to each other and then wound in one direction to prepare a jelly-roll-type electrode assembly. Then, after bending the non-coating portions 22 of the positive electrode and the negative electrode toward a winding center C, current collecting plates are welded and bonded to the non-coating portion of the positive electrode and the non-coating portion of the negative electrode, respectively, and the battery having a tab-less structure may be prepared by connecting the current collecting plates to the electrode terminals. Since the current collecting plate has a larger cross-sectional area than a strip-type electrode tab and resistance is inversely proportional to a cross-sectional area of a passage through which current flows, cell resistance may be significantly reduced when a secondary battery is formed in the above-described structure.

The positive electrode and negative electrode non-coating portions may be processed in a form of a plurality of independently bendable segments, and at least a portion of the plurality of segments may be bent toward the winding center C of the electrode assembly.

The segments may be formed by processing the current collectors of the positive electrode and the negative electrode through a metal foil cutting process such as laser notching, ultrasonic cutting, and punching.

In a case in which the non-coating portions of the positive electrode and the negative electrode are processed in the form of the plurality of segments, deformation or damage of the non-coating portions may be prevented by reducing stress that is applied to the non-coating portions during bending, and welding characteristics with the current collecting plate may be improved.

The current collecting plate and the non-coating portion are generally bonded by welding, wherein, in order to improve the welding characteristics, a strong pressure must be applied to a welding region of the non-coating portion to bend the non-coating portion as flat as possible. However, a shape of the non-coating portion may be irregularly distorted and deformed during this bending process, and the deformed portion may contact the electrode of opposite polarity to cause an internal short circuit or cause micro-cracks in the non-coating portion. However, if the non-coating portions of the positive electrode and the negative electrode are processed in the form of the plurality of independently bendable segments, the stress applied to the non-coating portions during bending is mitigated so that the deformation and damage of the non-coating portions may be minimized.

Also, in a case in which the non-coating portion is processed in the form of segments as described above, an overlap occurs between the plurality of segments during bending, and, as a result, welding strength with respect to the current collecting plate is increased and a problem, in which, when the latest technique, such as laser welding, is used, a laser beam penetrates into the electrode assembly to ablate the separator or the active material, may be prevented. Preferably, at least a portion of the plurality of bent segments may be overlapped on an upper end and a lower end of the electrode assembly, and the current collecting plate may be bonded to the overlapped plurality of segments.

As illustrated in FIG. 3, the electrode assembly according to the present disclosure may be formed in a structure in which an insulation layer 24 is additionally formed on the positive electrode 10. Specifically, the insulation layer 24 may be formed to cover a portion of a positive electrode active material layer and a portion of the non-coating portion along a direction parallel to the winding direction of the electrode assembly.

With respect to a battery having a tab-less structure in which a non-coating portion 22c of the positive electrode 10 and a non-coating portion 22a of the negative electrode 11 are used as electrode tabs, an electrode assembly is formed such that the positive electrode 10 protrudes above the separator 12 and the negative electrode 11 protrudes below the separator 12, and the protruding positive electrode 10 and/or negative electrode 11 are bent and then bonded to the current collecting plate. In a case in which the positive electrode 10 or the negative electrode 11 is bent as described above, the current collector of the positive electrode 10 or the negative electrode 11 crosses the separator and is disposed close to the electrode having an opposite polarity, and, as a result, there is a possibility that the positive electrode and the negative electrode are electrically contacted to cause an internal short circuit. However, as illustrated in FIG. 5, in a case in which the insulation layer 24 covering the portions of the positive electrode active material layer and the non-coating portion is formed, since the electrical contact between the positive electrode 10 and the negative electrode 11 may be prevented by the insulation layer 24, occurrence of a short circuit in the battery may be prevented.

Preferably, the insulation layer 24 may be provided on at least one side of the current collector of the positive electrode 10, and preferably, may be provided on both sides of the positive electrode 10.

Also, the insulation layer 24 may be formed in a region of the positive electrode 10 which may face an active material layer 21a of the negative electrode 11. For example, on a surface of the non-coating portion 22c of the positive electrode 10 which faces the negative electrode 11 after being bent, the insulation layer 24 may be formed by extending to an end of the non-coating portion 22c. However, with respect to a surface opposite to the surface facing the negative electrode 11 after being bent, it is desirable that the insulation layer 24 is formed only on a portion of the non-coating portion 22c, for example, before a bending point of the non-coating portion 22c. The reason for this is that, in a case in which the insulation layer 24 is formed on an entire region of the non-coating portion of the surface opposite to the surface facing the negative electrode 11, since an electrical contact with the current collecting plate is not possible, it may not function as the electrode tab.

The insulation layer 24 may be used as long as it may be attached to the positive electrode while ensuring insulation performance, and a material or component thereof is not particularly limited. For example, the insulation layer may be an insulation coating layer or an insulation tape, and the insulation coating layer may include an organic binder and inorganic particles. In this case, the organic binder, for example, may be a styrene-butadiene rubber (SBR), and the inorganic particles may be alumina oxide, but are not limited thereto.

A diameter of a core portion of the electrode assembly of the present disclosure may be 5 mm or more, specifically, 5 mm to 8 mm. In a case in which the diameter of the core portion of the electrode assembly satisfies the above range, a defect rate may be suppressed in a winding process for preparing the jelly-roll electrode assembly, and a sufficient space for electrolyte injection may be secured in the cylindrical-type secondary battery. In a case in which the diameter of the core portion of the electrode assembly is less than 5 mm, since an internal pressure of the cell is increased, an issue, such as venting, may occur. In contrast, in a case in which the diameter of the core portion of the electrode assembly is greater than 8 mm, since energy density per cell volume is decreased and wettability to the electrolyte is reduced, cell performance degradation may occur. Particularly, with respect to a large-sized cylindrical-type battery having a form factor of 0.4 or more, since the electrolyte wetting of the electrode assembly is improved by injecting the electrolyte having an appropriate level of viscosity, cell performance may be improved.

An overall diameter of the electrode assembly may be a normal diameter corresponding to the large-sized cylindrical-type battery having a form factor of 0.4 or more.

Next, each component of the electrode assembly of the present disclosure will be described in more detail.

**Positive Electrode**

The positive electrode may be prepared by a method in which a positive electrode slurry is applied to one side or both sides of a long sheet-shaped positive electrode collector, a solvent of the positive electrode slurry is removed through a drying process, and rolling is performed. A positive electrode including a non-coating portion may be prepared by a method in which the positive electrode slurry is not applied to a partial region of the positive electrode collector, for example, one end of the positive electrode collector when the positive electrode slurry is applied.

As the positive electrode collector, various positive electrode collectors used in the art may be used. For example, as the positive electrode collector, stainless steel, aluminum, nickel, titanium, fired carbon, or aluminum or stainless steel that is surface-treated with one of carbon, nickel, titanium, silver, or the like may be used. The positive electrode collector may typically have a thickness of 3 $\mu$m to 500 $\mu$m, and microscopic irregularities may be formed on a surface of the collector to improve the adhesion of the positive electrode active material. The positive electrode collector, for example, may be used in various shapes such as that of a film, a sheet, a foil, a net, a porous body, a foam body, a non-woven fabric body, and the like.

Also, the positive electrode slurry may be prepared by dispersing the positive electrode active material in a solvent such as dimethyl sulfoxide (DMSO), isopropyl alcohol, N-methylpyrrolidone (NMP), acetone, or water.

Positive electrode active materials commonly used in the art may be used as the above positive electrode active material, but preferably, a lithium transition metal oxide containing nickel (Ni) and cobalt (Co) may be used, and specifically, the positive electrode active material may include a lithium transition metal oxide satisfying Equation (2) below.

$$\text{Equation (2):}$$

$$18 \leq X_{Ni}/X_{Co} \leq 48$$

In Equation (2), $X_{Ni}$ is a mole% of Ni among total metals excluding lithium in the lithium transition metal oxide, and $X_{Co}$ is a mole% of Co among the total metals excluding lithium in the lithium transition metal oxide.

In a case in which a compositional ratio of Ni to Co in the lithium transition metal oxide represented by Equation (2) is less than 18, since a side reaction with the electrolyte is increased, an increase in interfacial resistance is caused. In contrast, in a case in which the compositional ratio of Ni to Co satisfies a range of 18 to 48, since structural stability of the positive electrode active material is improved to suppress an oxidation reaction, the side reaction with the electrolyte may be effectively prevented. Specifically, it is more desirable that the compositional ratio of Ni to Co in the lithium transition metal oxide is 40 or less, or 35 or less.

Preferably, the lithium transition metal oxide may be represented by [Formula 1] below.

[Formula 1]        $Li_aNi_bCo_cM^1_dM^2_eO_2$

In Formula 1, $M^1$ may be manganese (Mn), aluminum (Al), or a combination thereof, and may preferably be Mn or Mn and Al.

$M^2$ may be at least one selected from the group consisting of zirconium (Zr), tungsten (W), yttrium (Y), barium (Ba), calcium (Ca), titanium (Ti), magnesium (Mg), tantalum (Ta), and niobium (Nb), may preferably be at least one selected from the group consisting of Zr, Y, Mg, and Ti, and may more preferably be Zr, Y, or a combination thereof. The element $M^2$ is not necessarily included, but, in a case in which it is included in an appropriate amount, it may play a role in promoting grain growth during sintering or improving crystal structure stability.

a represents a molar ratio of lithium in the lithium nickel-based oxide, wherein a may satisfy $0.8 \leq a \leq 1.2$, $0.85 \leq a \leq 1.15$, or $0.9 \leq a \leq 1.2$. When the molar ratio of the lithium satisfies the above range, a crystal structure of the lithium nickel-based oxide may be stably formed.

b represents a molar ratio of nickel among total metals excluding lithium in the lithium nickel-based oxide, wherein b may satisfy $0.85 < b < 1$, $0.87 \leq b < 1$, or $0.9 \leq b < 1$. When the molar ratio of the nickel satisfies the above range, high energy density may be exhibited to achieve high capacity.

c represents a molar ratio of cobalt among the total metals excluding lithium in the lithium nickel-based oxide, wherein c may satisfy $0 < c < 0.06$ or $0.01 \leq c \leq 0.05$. When the molar ratio of the cobalt satisfies the above range, good resistance characteristics and output characteristics may be achieved.

d represents a molar ratio of element $M^1$ among the total metals excluding lithium in the lithium nickel-based oxide, wherein d may satisfy $0 < d < 0.15$, $0 < d < 0.14$, or $0.01 \leq d \leq 0.12$. When the molar ratio of the element $M^1$ satisfies the above range, the structural stability of the positive electrode active material is excellent.

e represents a molar ratio of element $M^2$ among the total metals excluding lithium in the lithium nickel-based oxide, wherein e may satisfy $0 \leq e \leq 0.1$ or $0 \leq e \leq 0.05$.

Specifically, the positive electrode active material of the present disclosure may be Li $(Ni_{0.90}Mn_{0.05}Co_{0.05})O_2$, Li $(Ni_{0.94}Co_{0.04}Mn_{0.02})O_2$, Li$(Ni_{0.87}Mn_{0.07}Co_{0.04}Al_{0.02})O_2$, or Li$(Ni_{0.90}Mn_{0.03}Co_{0.05}Al_{0.02})O_2$.

The positive electrode slurry may optionally further include at least one of a conductive agent and a binder.

The conductive agent is used to provide conductivity to the electrode, wherein any conductive agent may be used without particular limitation as long as it has electron conductivity without causing chemical changes in the battery. Specific examples of the conductive agent may be graphite such as natural graphite or artificial graphite; a carbon-based material such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on a total weight of the positive electrode active material layer.

The binder improves adhesion between the positive electrode active material particles and adhesion between the positive electrode active material and the positive electrode collector, wherein specific examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the positive electrode active material layer.

**Negative Electrode**

The negative electrode may be prepared by a method in which a negative electrode slurry is applied to one side or both sides of a long sheet-shaped negative electrode collector, a solvent of the negative electrode slurry is removed through a drying process, and rolling is performed. A negative electrode including a non-coating portion may be prepared by a method in which the negative electrode slurry is not applied to a partial region of the negative electrode collector, for example, one end of the negative electrode collector when the negative electrode slurry is applied.

As the negative electrode collector, negative electrode collectors commonly used in the art may be used, and, for example, copper, stainless steel, aluminum, nickel, titanium, fired carbon, copper or stainless steel that is surface-treated with one of carbon, nickel, titanium, silver, or the like, and an aluminum-cadmium alloy may be used. The negative electrode collector may typically have a thickness of 3 μm to 500 μm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

Also, the negative electrode slurry may be prepared by dispersing the negative electrode active material in a solvent such as dimethyl sulfoxide (DMSO), isopropyl alcohol, N-methylpyrrolidone (NMP), acetone, and water.

A carbon-based negative electrode active material used in the art may be used as the negative electrode active material, and in addition, a silicon-based negative electrode active material may be mixed with the carbon-based negative electrode active material and used as the negative electrode active material.

As the carbon-based active material, various carbon-based materials used in the art, for example, graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based material is not particularly limited, and materials of various shapes, such as an irregular shape, planar shape, flaky shape, spherical shape, or fibrous shape, may be used.

Also, the silicon-based negative electrode active material may include at least one selected from the group consisting of silicon (Si), silicon carbide (SiC), silicon chloride, silicon oxide ($SiO_x$, where 0<x<2), and a Si-Y alloy (where Y is an element selected from the group consisting of alkali metal, alkaline earth metal, a Group 13 element, a Group 14 element, transition metal, a rare earth element, and a combination thereof, and is not Si). The element Y may be selected from the group consisting of Mg, Ca, strontium (Sr), Ba, radium (Ra), scandium (Sc), Y, Ti, Zr, hafnium (Hf), rutherfordium (Rf), vanadium (V), Nb, Ta, dubnium (Db), chromium (Cr), molybdenum (Mo), W, seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), Al, gallium (Ga), tin (Sn), indium (In), germanium (Ge), phosphorus (P), arsenic (As), antimony (Sb), bismuth (Bi), sulfur (S), selenium (Se), tellurium (Te), polonium (Po), and a combination thereof.

The carbon-based negative electrode active material and the silicon-based negative electrode active material may be included in a weight ratio of 99:1 to 95:5, and may more specifically be included in a weight ratio of 95:5 to 97:3.

In a case in which the mixing ratio of the carbon-based negative electrode active material to the silicon-based negative electrode active material satisfies the above range, since volume expansion of the silicon-based compound is suppressed while capacity characteristics are improved, excellent cycle performance may be ensured. In a case in which an amount of the silicon (Si)-based compound is excessively small, since it is difficult to increase the energy density, it is difficult to increase the capacity of the battery, and, in a case in which the amount of the silicon (Si)-based compound is excessively large, it is not desirable because a degree of volume expansion of the negative electrode may be increased.

The negative electrode slurry may optionally further include at least one of a conductive agent and a binder.

The conductive agent is used to provide conductivity to the negative electrode, wherein any conductive agent may be used without particular limitation as long as it has electron conductivity without causing chemical changes in the battery. Specific examples of the conductive agent may be graphite such as natural graphite or artificial graphite; a carbon based-material such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on a total weight of the negative electrode active material layer.

The binder improves adhesion between the negative electrode active material particles and adhesion between the negative electrode active material and the negative electrode collector, wherein specific examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the negative electrode active material layer.

**Separator**

The separator separates the negative electrode and the positive electrode and provides a movement path of lithium ions, wherein any separator may be used as the separator without particular limitation as long as it is typically used in a lithium secondary battery. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength.

**[Cylindrical-type Lithium Secondary Battery]**

Next, a cylindrical-type lithium secondary battery according to the present disclosure will be described.

The cylindrical-type lithium secondary battery according to the present disclosure includes an electrode assembly, which is formed by winding a positive electrode including a non-coating portion and a negative electrode including a non-coating portion, an electrolyte, a battery case in which the electrode assembly and the electrolyte are accommodated, and a sealing body sealing an open end of the battery case. Also, a tab-less structure may be achieved in which at least a portion of the non-coating portion of the positive electrode or the non-coating portion of the negative electrode is defined as an electrode tab.

Preferably, the cylindrical-type lithium secondary battery according to the present disclosure may be a large-sized cylindrical-type battery having a form factor ratio (defined as a value obtained by dividing a diameter of the cylindrical-type battery by a height, that is, a ratio of the diameter (T) to the height (H)) of 0.4 or more, preferably, 0.4 to 0.6. Herein, the form factor means a value representing the diameter and height of the cylindrical-type battery.

The cylindrical-type battery according to the present disclosure, for example, may be a 46110 cell (diameter 46 mm, height 110 mm, form factor ratio 0.418), a 48110 cell (diameter 48 mm, height 110 mm, form factor ratio 0.436), a 4880 cell (diameter 48 mm, height 80 mm, form factor ratio 0.600), or a 4680 cell (diameter 46 mm, height 80 mm, form factor ratio 0.575). In a number representing the form factor, first two numbers represent the diameter of the cell, and next two or three numbers represent the height of the cell.

The cylindrical-type battery according to the present disclosure may preferably be a battery having a tab-less structure which does not include an electrode tab, but is not limited thereto.

The battery having a tab-less structure, for example, may have a structure in which a positive electrode and a negative electrode each include a non-coating portion on which an active material layer is not formed, the non-coating portion of the positive electrode and the non-coating portion of the negative electrode are disposed at an upper end and a lower end of the electrode assembly, respectively, a current collecting plate is bonded to each of the non-coating portion of the positive electrode and the non-coating portion of the negative electrode, and the current collecting plate is connected to an electrode terminal.

A cross-sectional view of a cylindrical-type battery having a tab-less-structure according to an embodiment of the present disclosure is illustrated in FIGS. 4 and 5. Hereinafter, the cylindrical-type battery according to the embodiment of the present disclosure will be described with reference to FIGS. 4 and 5. However, FIGS. 4 and 5 only show one embodiment of the present disclosure, and the structure of the cylindrical-type battery of the present disclosure is not limited to the scope disclosed in FIGS. 4 and 5.

A cylindrical-type battery 140 according to an embodiment of the present disclosure includes a jelly-roll-type electrode assembly 141 as described above, a battery case 142 in which the electrode assembly 141 and an electrolyte (not shown) are accommodated, and a sealing body 143 sealing an open end of the battery case 142.

In this case, a positive electrode and a negative electrode of the electrode assembly may each include a non-coating portion on which an active material layer is not formed, and may be stacked and wound such that the non-coating portion of the positive electrode and the non-coating portion of the negative electrode are disposed at the upper end and the lower end of the electrode assembly, respectively. Since the electrode assembly has been described above, only components other than the electrode assembly will be described below.

The battery case 142 is a cylindrical-type container having an upper opening, wherein it is formed of a conductive metallic material such as aluminum or steel. The battery case accommodates the electrode assembly 141 in an inner space through the upper end opening and also accommodates the electrolyte (not shown) together.

It is desirable that the cylindrical-type battery 140 of the present disclosure does not include a current interruption device (CID).

### Electrolyte

The electrolyte used in the cylindrical-type lithium secondary battery of the present disclosure may include a lithium salt containing $LiPF_6$ and an organic solvent containing ethylene carbonate.

Also, the electrolyte of the present disclosure may additionally include at least one organic solvent of a cyclic carbonate-based organic solvent, a linear carbonate-based organic solvent, a linear ester-based organic solvent, and a cyclic ester-based organic solvent, if necessary.

The cyclic carbonate-based organic solvent is a highly viscous organic solvent, wherein the cyclic carbonate-based organic solvent may typically include at least one organic solvent selected from the group consisting of propylene carbonate (PC), 1,2-butylene carbonate, 2,3-butylene carbonate, 1,2-pentylene carbonate, 2,3-pentylene carbonate, and vinylene carbonate.

Furthermore, the linear carbonate-based organic solvent is an organic solvent having low viscosity and low permittivity, wherein typical examples of the linear carbonate-based organic solvent may be at least one organic solvent selected from the group consisting of ethyl methyl carbonate (EMC), dimethyl carbonate (DMC), diethyl carbonate (DEC), dipropyl carbonate, methylpropyl carbonate, and ethylpropyl carbonate, and the linear carbonate-based organic solvent may specifically include at least one of ethyl methyl carbonate (EMC) and dimethyl carbonate (DMC).

Specific examples of the linear ester-based organic solvent may be at least one organic solvent selected from the group consisting of methyl acetate, ethyl acetate, propyl acetate, methyl propionate, ethyl propionate, propyl propionate, and butyl propionate.

The cyclic ester-based organic solvent may include at least one organic solvent selected from the group consisting of γ-butyrolactone, γ-valerolactone, γ-caprolactone, σ-valerolactone, and ε-caprolactone.

In order to improve life characteristics of the battery, suppress a reduction in battery capacity, and improve discharge capacity of the battery, the electrolyte may further include other additives in addition to the electrolyte components.

Typical examples of these other additives may include at least one other additive selected from the group consisting of a cyclic carbonate-based compound, a halogen-substituted carbonate-based compound, a sultone-based compound, a sulfate-based compound, a borate-based compound, a nitrile-based compound, a benzene-based compound, an amine-based compound, a silane-based compound, and a lithium salt-based compound different from the lithium salt contained in the electrolyte.

Specifically, the other additives may include one selected from the group consisting of vinylene carbonate (VC), vinyl ethylene carbonate, fluoroethylene carbonate (FEC), 1,3-propane sultone (PS), 1,4-butane sultone, ethane sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, $LiN(SO_2F)_2$ (Lithium bis(fluorosulfonyl)imide, LiFSI), $LiN(SO_2CF_3)_2$ (lithium bis(trifluoromethane sulfonyl) imide, LiTFSI), $LiPO_2F_2$, LiODFB, LiBOB (lithium bis(oxalato) borate, $LiB(C_2O_4)_2$), and $LiBF_4$, or a compound of two or more thereof.

The other additives may be included in an amount of 0.01 wt% to 20 wt% based on the total weight of the electrolyte, and may preferably be included in an amount of 0.05 wt% to 5.0 wt%. If the amount of the other additives is less than 0.01 wt%, effects of improving low-temperature output, high-temperature storage characteristics, and high-temperature life characteristics of the battery are insignificant, and, if the amount of the other additives is greater than 20 wt%, there is a possibility that a side reaction in the electrolyte occurs excessively during charge and discharge of the battery. Particularly, since the other additives may not be sufficiently decomposed at high temperatures when an excessive amount of the additives for forming an SEI layer is added, the other additives may be present in the form of an unreacted material or precipitates in the electrolyte at room temperature. Accordingly, a side reaction may occur in which life or resistance characteristics of the secondary battery are degraded.

In FIG. 4, the battery case 142 is electrically connected to a non-coating portion 146b of the negative electrode, and functions as a negative electrode terminal that contacts an external power source to transfer a current applied from the external power source to the negative electrode.

In this case, the battery case 142 is a cylindrical-type container having an upper opening, wherein it is formed of a conductive metallic material such as aluminum or steel. The battery case accommodates the electrode assembly 141 in an inner space through the upper end opening and also accommodates the electrolyte (not shown) together.

If necessary, a beading portion 147 and a crimping portion 148 may be included at an upper end of the battery case 142. The beading portion 147 may be formed by pressing an outer circumferential surface of the battery case 142 to a distance D1. The beading portion 147 prevents the electrode assembly 141 accommodated inside the battery case 142 from escaping through the upper end opening of the battery case 142, and may function as a support on which the sealing body 143 is stably placed.

The crimping portion 148 may be formed on an upper portion of the beading portion 147 and has an extended and bent shape to surround an outer circumferential surface of a cap plate 143a disposed on the beading portion 147 and a portion of an upper surface of the cap plate 143a.

Next, the sealing body 143 is for sealing the open end of the battery case 142, wherein it includes the cap plate 143a and a first gasket 143b providing airtightness between the cap plate 143a and the battery case 142 and having insulation properties, and, if necessary, may further include a connection plate 143c electrically and mechanically bonded to the cap plate 143a. The cap plate 143a may be pressed onto the beading portion 147 formed in the battery case 142 and may be fixed by the crimping portion 148.

The cap plate 143a is a component formed of a conductive metallic material, wherein it covers the upper end opening of the battery case 142. The cap plate 143a is electrically connected to the positive electrode of the electrode assembly 141, and is electrically insulated from the battery case 142 through the first gasket 143b. Thus, the cap plate 143a may function as a positive electrode terminal of the cylindrical-type secondary battery. The cap plate 143a may include a protrusion 143d protruding upward from the center C, and the protrusion 143d may contact an external power source to allow a current to be applied from the external power source.

The first gasket 143b may be disposed between the cap plate 143a and the crimping portion 148 to secure airtightness of the battery case 142 and to electrically insulate the battery case 142 and the cap plate 143a.

The cylindrical-type battery 140 according to the present disclosure may further include current collecting plates 144 and 145, if necessary. The current collecting plates are respectively bonded to a non-coating portion 146a of the positive electrode and the non-coating portion 146b of the negative electrode, and connected to the electrode terminals (i.e., the positive electrode terminal and the negative electrode terminal).

Specifically, the cylindrical-type battery 140 according to the present disclosure may include the first current collecting plate 144 bonded to an upper portion of the electrode assembly 141 and the second current collecting plate 145 bonded to a lower portion of the electrode assembly 141.

The first current collecting plate 144 and/or the second current collecting plate 145 may be further included.

The first current collecting plate 144 is bonded to the upper portion of the electrode assembly 141. The first current collecting plate 144 is formed of a conductive metallic material, such as aluminum, copper, and nickel, and is electrically connected to the non-coating portion 146a of the positive electrode. A lead 149 may be connected to the first current collecting plate 144. The lead 149 may extend upward from the electrode assembly 141 and may be bonded to the connection plate 143c or may be directly bonded to a lower surface of the cap plate 143a. The lead 149 and other components may be bonded through welding. Preferably, the first current collecting plate 144 may be formed in one piece with the lead 149. In this case, the lead 149 may have a long plate shape extending outward from a center of the first current collecting plate 144.

The first current collecting plate 144 is bonded to an end of the non-coating portion 146a of the positive electrode, and the bonding, for example, may be performed by a method such as laser welding, resistance welding, ultrasonic welding, and soldering.

The second current collecting plate 145 is bonded to the lower portion of the electrode assembly 141. The second current collecting plate 145 is formed of a conductive metallic material, such as aluminum, copper, and nickel, and is electrically connected to the non-coating portion 146b of the negative electrode. One surface of the second current collecting plate 145 may be bonded to the non-coating portion 146b of the negative electrode, and an opposite surface may be bonded to an inner bottom surface of the battery case 142. In this case, the bonding may be performed by a method such as laser welding, resistance welding, ultrasonic welding, and soldering.

The cylindrical-type battery 140 according to the present disclosure may further include an insulator 146, if necessary. The insulator 146 may be disposed to cover an upper surface of the first current collecting plate 144. Since the insulator 146 covers the first current collecting plate 144, a direct contact between the first current collecting plate 144 and an inner circumferential surface of the battery case 142 may be prevented.

The insulator 146 includes a lead hole 151 so that the lead 149 extending upward from the first current collecting plate 144 may be drawn out. The lead 149 is drawn upward through the lead hole 151 and bonded to a lower surface of the connection plate 143c or the lower surface of the cap plate 143a.

The insulator 146 may be formed of an insulating polymer resin, for example, a polymer resin material such as polyethylene, polypropylene, polyimide, or polybutylene terephthalate.

The cylindrical-type battery 140 according to the present disclosure may further include a venting portion 152 formed on the lower surface of the battery case 142, if necessary. The venting portion 152 corresponds to a region having a thinner thickness than a surrounding region in the lower surface of the battery case 142. Since the venting portion 152 is thin, it is structurally weaker than the surrounding region. Thus, if a pressure in the cylindrical-type battery 140 is increased to a certain level or higher, the venting portion 152 is ruptured and gas in the battery case 152 may be discharged to the outside to prevent explosion of the battery.

A cross-sectional view of a cylindrical-type battery having a tab-less-structure according to another embodiment of the present disclosure is illustrated in FIG. 5. Hereinafter, the cylindrical-type battery according to the another embodiment of the present disclosure will be described with reference to FIG. 5. However, FIG. 5 only shows one embodiment of the present disclosure, and the structure of the cylindrical-type battery of the present disclosure is not limited to the scope disclosed in FIG. 5.

Referring to FIG. 5, a cylindrical-type battery 170 according to another embodiment of the present disclosure has different structures of battery case and sealing body in comparison to the cylindrical-type battery 140 illustrated in FIG. 3 and has substantially the same configurations of electrode assembly and electrolyte.

Specifically, the cylindrical-type battery 170 includes a battery case 171 through which a rivet terminal 172 is installed. The rivet terminal 172 is installed on a closed surface (upper surface in the drawing) partially closed at one end of the battery case 171. The rivet terminal 172 is riveted to a through hole (first opening of a first end) of the battery case 171 in a state in which an insulating second gasket 173 is disposed therebetween. The rivet terminal 172 is exposed to the outside in a direction opposite to a direction of gravity.

The rivet terminal 172 includes a terminal exposed portion 172a and a terminal insertion portion 172b. The terminal exposed portion 172a is exposed to the outside of the closed surface of the battery case 171. The terminal exposed portion 172a may be located at approximately a center of the partially closed surface of the battery case 171. A maximum diameter of the terminal exposed portion 172a may be formed to be greater than a maximum diameter of the through hole formed in the battery case 171. The terminal insertion portion 172b may be electrically connected to the non-coating portion 146a of the positive electrode through approximately the center of the closed surface of the battery case 171. The terminal insertion portion 172b may be riveted on an inner surface of the battery case 171. That is, an end of the terminal insertion portion 172b may have a shape curved toward the inner surface of the battery case 171. A maximum diameter of the end of the terminal insertion portion 172b may be greater than the maximum diameter of the through hole of the battery case 171.

A lower end surface of the terminal insertion portion 172b may be welded to the first current collecting plate 144 connected to the non-coating portion 146a of the positive electrode. An insulating cap 174 formed of an insulating material may be disposed between the first current collecting plate 144 and the inner surface of the battery case 171. The insulating cap 174 covers an upper portion of the first current collecting plate 144 and an upper edge portion of the electrode assembly 141. Thus, it may prevent a short circuit from being caused by contact between an outer circumferential non-coating portion B3 of the electrode assembly 141 and the inner surface of the battery case 171 having a different polarity. The terminal insertion portion 172b of the rivet terminal 172 may pass through the insulating cap 174 to be welded to the first collector plate 144.

The second gasket 173 is disposed between the battery case 171 and the rivet terminal 172 to prevent an electrical contact between the battery case 171 and the rivet terminal 172 which have opposite polarities to each other.

Thus, the upper surface having a substantially flat shape of the battery case 171 may function as a positive electrode terminal of the cylindrical-type battery 170.

The second gasket 173 includes a gasket exposed portion 173a and a gasket insertion portion 173b. The gasket exposed portion 173a is disposed between the terminal exposed portion 172a of the rivet terminal 172 and the battery case 171. The gasket insertion portion 173b is disposed between the terminal insertion portion 172b of the rivet terminal 172 and the battery case 171. The gasket insertion portion 173b may be closely attached to the inner surface of the battery case 171 by being deformed together during the riveting of the terminal insertion portion 172b. The second gasket 173, for example, may be formed of a polymer resin having insulation properties.

The gasket exposed portion 173a of the second gasket 173 may have an extended shape to cover an outer circumferential surface of the terminal exposed portion 172a of the rivet terminal 172. In a case in which the second gasket 173 covers the outer circumferential surface of the rivet terminal 172, occurrence of a short circuit in a process of bonding an electrical connection component, such as a bus bar, to the upper surface of the battery case 171 and/or to the rivet terminal 172 may be prevented. Although not shown in the drawing, the gasket exposed portion 173a may have an extended shape to cover not only the outer circumferential surface of the terminal exposed portion 172a but also a portion of an upper surface thereof.

In a case in which the second gasket 173 is formed of the polymer resin, the second gasket 173 may be bonded to the battery case 171 and the rivet terminal 172 by heat fusion. In this case, airtightness at a bonding interface between the second gasket 173 and the rivet terminal 172 and at a bonding interface between the second gasket 173 and the battery case 171 may be enhanced. In a case in which the gasket exposed portion 173a of the second gasket 173 has a shape extending to the upper surface of the terminal exposed portion 172a, the rivet terminal 172 may be integrally bonded to the second gasket 173 by insert injection molding.

A region 175 other than regions occupied by the rivet terminal 172 and the second gasket 173 in the upper surface of the battery case 171 corresponds to a negative electrode terminal having a polarity opposite to that of the rivet terminal 172.

A second current collecting plate 176 is bonded to the lower portion of the electrode assembly 141. The second current collecting plate 176 is formed of a conductive metallic material, such as aluminum, steel, copper, and nickel, and is electrically connected to the non-coating portion 146b of the negative electrode.

Preferably, the second current collecting plate 176 is electrically connected to the battery case 171. For this purpose, at least a portion of an edge portion of the second current collecting plate 176 may be fixed by being disposed between the inner surface of the battery case 171 and the first gasket 178b. In one example, the at least a portion of the edge portion of the second current collecting plate 176 may be fixed to a beading portion 180 by welding while being supported on a lower end surface of the beading portion 180 formed at a lower end of the battery case 171. In a modified example, the at least a portion of the edge portion of the second current collecting plate 176 may be directly welded to an inner wall surface of the battery case 171.

The second current collecting plate 176 may have a plurality of irregularities (not shown) which are radially formed on a surface facing the non-coating portion 146b. In a case in which the irregularities are formed, the second current collecting plate 176 may be pressed to press the irregularities into the non-coating portion 146b.

Preferably, the second current collecting plate 176 and an end of the non-coating portion 146b may be bonded by welding, for example, laser welding.

A sealing body 178 sealing a lower open end of the battery case 171 includes a cap plate 178a and a first gasket 178b. The first gasket 178b electrically separates the cap plate 178a and the battery case 171. A crimping portion 181 fixes an edge of the cap plate 178a and the first gasket 178b together. A venting portion 179 is included in the cap plate 178a. A configuration of the venting portion 179 is substantially the same as that of the above-described embodiment.

Preferably, the cap plate 178a is formed of a conductive metallic material. However, since the first gasket 178b is disposed between the cap plate 178a and the battery case 171, the cap plate 178a has no electrical polarity. The sealing body 178 functions to seal the lower open end of the battery case 171 and to discharge gas when an internal pressure of the battery cell 170 is increased above a critical value.

Preferably, the rivet terminal 172 electrically connected to the non-coating portion 146a of the positive electrode is used as the positive electrode terminal. Also, the portion 175 excluding the rivet terminal 172 in the upper surface of the battery case 171, which is electrically connected to the non-coating portion 146b of the negative electrode through the second current collecting plate 176, is used as the negative electrode terminal. As described above, in a case in which the two electrode terminals are disposed on the upper portion of the cylindrical-type battery, it is possible to dispose electrical connection components, such as a bus bar, on only one side of the cylindrical-type battery 170.

This may lead to simplification of a battery pack structure and improvement of energy density. Furthermore, since the portion 175 used as the negative electrode terminal has a substantially flat shape, a sufficient bonding area may be secured for bonding the electrical connection components such as a bus bar. Accordingly, the cylindrical-type battery 170 may reduce resistance at a bonding portion of the electrical connection component to a desired level.

In a case in which a cylindrical-type lithium secondary battery is formed in a tab-less structure as described above, since the battery having the tab-less structure has less current concentration than a conventional battery having electrode tabs, it may effectively reduce heat generation in the battery, and, accordingly, an effect of improving thermal stability of the battery may be obtained.

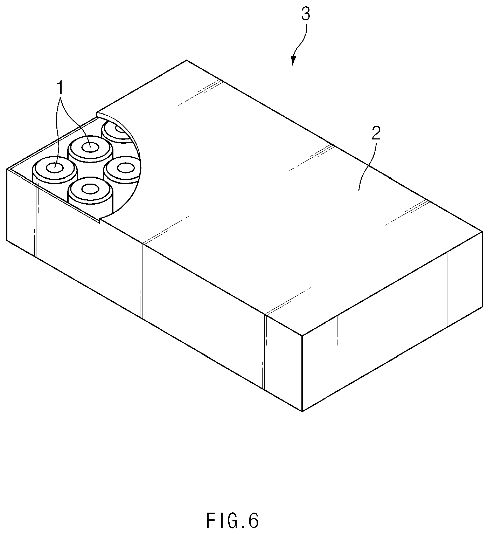

The cylindrical-type lithium secondary battery of the present disclosure as described above may be used to prepare a battery pack. A configuration of a battery pack according to an embodiment of the present disclosure is schematically illustrated in FIG. 6. Referring to FIG. 6, a battery pack 3 according to an embodiment of the present disclosure includes an assembly, in which cylindrical-type secondary batteries 1 are electrically connected, and a pack housing 2 accommodating the assembly. The cylindrical-type secondary battery 1 is the battery cell according to the above-described embodiment. In the drawing, for convenience of illustration, parts, such as a bus bar for electrically connecting the cylindrical-type secondary batteries 1, a cooling unit, and an external terminal, are omitted.

The battery pack 3 may be mounted in a vehicle. The vehicle, for example, may be an electric vehicle, a hybrid vehicle, or a plug-in hybrid vehicle. The vehicle includes a four-wheeled vehicle or a two-wheeled vehicle.

Hereinafter, the present disclosure will be described in more detail, according to specific examples.

**Example 1.**

(Electrolyte Preparation)

$LiPF_6$ was added to a non-aqueous organic solvent, in which ethylene carbonate (EC), ethylmethyl carbonate (EMC), and dimethyl carbonate (DMC) were mixed in a volume ratio of 20:5:75, such that a concentration of the $LiPF_6$ was 1.3 M to prepare an electrolyte (ethylene carbonate content: 19.17 wt%/$LiPF_6$ content: 15.41 wt%) (see Table 1 below).

(Secondary Battery Preparation)

A positive electrode slurry was prepared by adding and mixing a positive electrode active material ($Li(Ni_{0.90}Mn_{0.03}Co_{0.05}Al_{0.02})O_2$), which was in the form of a single particle and had a unimodal particle size distribution with an average particle diameter $D_{50}$ of 3 $\mu$m, carbon nanotubes, and a PVDF binder in a weight ratio of 97.8:0.6:1.6 in N-methyl pyrrolidone. One surface of an aluminum current collector sheet was coated with the positive electrode slurry, dried at 120°C, and then rolled to prepare a positive electrode plate.

A negative electrode active material (graphite and SiO = 95:5 weight ratio), a conductive agent (super C), a styrenebutadiene rubber (SBR), and carboxymethyl cellulose (CMC) were added to water in a weight ratio of 96:2:1.5:0.5 and mixed to prepare a negative electrode slurry. One surface of a copper current collector sheet was coated with the negative electrode slurry, dried at 150°C, and then rolled to prepare a negative electrode plate.

A separator was disposed between the above-prepared positive electrode plate and negative electrode plate such that they are stacked in the order of the separator/the positive electrode plate/the separator/the negative electrode plate and then wound to prepare an electrode assembly (diameter of core portion: 7 mm). After the electrode assembly prepared as described above was inserted into a cylindrical battery can (diameter: 46 mm/height: 80 mm), the electrolyte (38 g) was injected to prepare a 4680 cell (form factor ratio: 0.575).

**Example 2.**

(Secondary Battery Preparation)

An electrolyte and a 4680 cell (form factor ratio: 0.575) including the same were prepared in the same manner as in Example 1 except that the electrolyte (31 g) of Example 1 was injected.

**Example 3.**

(Electrolyte Preparation)

$LiPF_6$ was added to a non-aqueous organic solvent, in which ethylene carbonate (EC), ethylmethyl carbonate (EMC), and dimethyl carbonate (DMC) were mixed in a volume ratio of 20:5:75, such that a concentration of the $LiPF_6$ was 1.2 M to prepare an electrolyte (ethylene carbonate content: 19.40 wt%/$LiPF_6$ content: 14.43 wt%) (see Table 1 below).

(Secondary Battery Preparation)

The electrolyte and a 4680 cell including the same were prepared in the same manner as in Example 1 except that the above-prepared electrolyte (38 g) was injected.

**Example 4.**

(Secondary Battery Preparation)

An electrolyte and a 4680 cell (form factor ratio: 0.58) including the same were prepared in the same manner as in Example 3 except that the electrolyte (31 g) of Example 3 was injected.

**Example 5.**

(Electrolyte Preparation)

$LiPF_6$ was added to a non-aqueous organic solvent, in which ethylene carbonate (EC), ethylmethyl carbonate (EMC), and dimethyl carbonate (DMC) were mixed in a volume ratio of 20:5:75, such that a concentration of the $LiPF_6$ was 1.05 M to prepare an electrolyte (ethylene carbonate content: 19.76 wt%/$LiPF_6$ content: 14.40 wt%) (see Table 1 below).

(Secondary Battery Preparation)

The electrolyte and a 4680 cell including the same were prepared in the same manner as in Example 1 except that the above-prepared electrolyte (31 g) was injected.

**Example 6.**

(Electrolyte Preparation)

After $LiPF_6$ was added to a non-aqueous organic solvent, in which ethylene carbonate (EC), ethylmethyl carbonate (EMC), and dimethyl carbonate (DMC) were mixed in a volume ratio of 20:5:75, such that a concentration of the $LiPF_6$ was 1.2 M, 3 wt% of vinylene carbonate (VC) and 0.5 wt% of 1,3-propane sultone (1,3-PS) were added to prepare an electrolyte (ethylene carbonate content: 19.40 wt%/$LiPF_6$ content: 14.43 wt%) (see Table 1 below).

(Secondary Battery Preparation)

The electrolyte and a 4680 cell including the same were prepared in the same manner as in Example 1 except that the above-prepared electrolyte (38 g) was injected.

**Example 7.**

(Electrolyte Preparation)

After $LiPF_6$ was added to a non-aqueous organic solvent, in which ethylene carbonate (EC), ethylmethyl carbonate (EMC), and dimethyl carbonate (DMC) were mixed in a volume ratio of 20:5:75, such that a concentration of the $LiPF_6$ was 1.2 M, 3 wt% of vinylene carbonate (VC), 0.5 wt% of 1,3-propane sultone (1,3-PS), and 1 wt% of fluoroethylene carbonate (FEC) were added to prepare an electrolyte (ethylene carbonate content: 19.17 wt%/$LiPF_6$ content: 14.40 wt%) (see Table 1 below).

(Secondary Battery Preparation)

The electrolyte and a 4680 cell including the same were prepared in the same manner as in Example 1 except that the above-prepared electrolyte (38 g) was injected.

**Example 8.**

(Electrolyte Preparation)

After $LiPF_6$ was added to a non-aqueous organic solvent, in which ethylene carbonate (EC), ethylmethyl carbonate (EMC), and dimethyl carbonate (DMC) were mixed in a volume ratio of 20:5:75, such that a concentration of the $LiPF_6$ was 1.2 M, 3 wt% of vinylene carbonate (VC) and 0.5 wt% of ethylene sulfate (Esa) were added to prepare an electrolyte (ethylene carbonate content: 19.40 wt%/$LiPF_6$ content: 14.43 wt%) (see Table 1 below).

(Secondary Battery Preparation)

The electrolyte and a 4680 cell including the same were prepared in the same manner as in Example 1 except that the above-prepared electrolyte (38 g) was injected.

**Comparative Example 1.**

(Secondary Battery Preparation)

An electrolyte and a 4680 cell (form factor ratio: 0.58) including the same were prepared in the same manner as in Example 3 except that the electrolyte (43 g) of Example 3 was injected.

**Comparative Example 2.**

(Secondary Battery Preparation)

An electrolyte and a 4680 cell (form factor ratio: 0.58) including the same were prepared in the same manner as in Example 3 except that the electrolyte (25 g) of Example 3 was injected.

**Comparative Example 3.**

(Electrolyte Preparation)

$LiPF_6$ was added to a non-aqueous organic solvent, in which ethylene carbonate (EC), ethylmethyl carbonate (EMC), and dimethyl carbonate (DMC) were mixed in a volume ratio of 20:5:75, such that a concentration of the $LiPF_6$ was 0.95 M to prepare an electrolyte (ethylene carbonate content: 20.00 wt%/$LiPF_6$ content: 11.89 wt%) (see Table 1 below).

(Secondary Battery Preparation)

The electrolyte and a 4680 cell including the same were prepared in the same manner as in Example 1 except that the above-prepared electrolyte (31 g) was injected.

**Comparative Example 4.**

(Electrolyte Preparation)

$LiPF_6$ was added to a non-aqueous organic solvent, in which ethylene carbonate (EC), ethylmethyl carbonate (EMC), and dimethyl carbonate (DMC) were mixed in a volume ratio of 20:5:75, such that a concentration of the $LiPF_6$ was 1.6 M to prepare an electrolyte (ethylene carbonate content: 18.50 wt%/$LiPF_6$ content: 17.73 wt%) (see Table 1 below).

(Secondary Battery Preparation)

The electrolyte and a 4680 cell including the same were prepared in the same manner as in Example 1 except that the above-prepared electrolyte (38 g) was injected.

**Comparative Example 5.**

(Electrolyte Preparation)

$LiPF_6$ was added to a non-aqueous organic solvent, in which ethylene carbonate (EC), ethylmethyl carbonate (EMC), and dimethyl carbonate (DMC) were mixed in a volume ratio of 20:5:75, such that a concentration of the $LiPF_6$ was 1.3 M to prepare an electrolyte (ethylene carbonate content: 19.17 wt%/$LiPF_6$ content: 15.41 wt%) (see Table 1 below).

(Secondary Battery Preparation)

A positive electrode slurry was prepared by adding and mixing a positive electrode active material ($Li(Ni_{0.90}Mn_{0.03}Co_{0.05}Al_{0.02})O_2$), which was in the form of a single particle and had a unimodal particle size distribution with an average particle diameter $D_{50}$ of 3 $\mu$m, carbon nanotubes, and a PVDF binder in a weight ratio of 97.8:0.6:1.6 in N-methyl pyrrolidone. One surface of an aluminum current collector sheet was coated with the positive electrode slurry, dried at 120°C, and then rolled to prepare a positive electrode plate.

A negative electrode active material (graphite and SiO = 95:5 weight ratio), a conductive agent (super C), a styrenebutadiene rubber (SBR), and carboxymethyl cellulose (CMC) were added to water in a weight ratio of 96:2:1.5:0.5 and mixed to prepare a negative electrode slurry. One surface of a copper current collector sheet was coated with the negative electrode slurry, dried at 150°C, and then rolled to prepare a negative electrode plate.

A separator was disposed between the above-prepared positive electrode plate and negative electrode plate such that they are stacked in the order of the separator/the positive electrode plate/the separator/the negative electrode plate and then wound to prepare an electrode assembly (diameter of core portion: 7 mm). After the electrode assembly prepared as described above was inserted into a cylindrical battery can (diameter: 46 mm, height: 70 mm), the electrolyte (38 g) was injected to prepare a 4670 cell (form factor ratio: 0.657).

**Comparative Example 6.**

(Secondary Battery Preparation)

A 46120 cell (form factor ratio: 0.383) was prepared in the same manner as in Comparative Example 5 except that the prepared electrode assembly (diameter of core portion: 7 mm) was inserted into a cylindrical battery can (diameter: 46 mm, height 120 mm) and an electrolyte (38 g) was then injected.

[Table 1]

| | EC content in the electrol yte (wt%) | LiPF$_6$ content in the electrol yte (wt%) | Whether or not the additive was included | Amount of the electrol yte injected (g) | Form factor ratio | Equatio n (1) * |
|---|---|---|---|---|---|---|
| Example 1 | 19.17 | 15.41 | × | 38 | 0.575 | 5.69 |
| Example 2 | 19.17 | 15.41 | × | 31 | 0.575 | 6.98 |
| Example 3 | 19.40 | 14.43 | × | 38 | 0.575 | 6.15 |
| Example 4 | 19.40 | 14.43 | × | 31 | 0.575 | 7.54 |
| Example 5 | 19.76 | 14.40 | × | 31 | 0.575 | 8.58 |
| Example 6 | 19.40 | 14.43 | ○ | 38 | 0.575 | 6.15 |
| Example 7 | 19.17 | 14.40 | ○ | 38 | 0.575 | 6.09 |
| Example 8 | 19.40 | 14.43 | ○ | 38 | 0.575 | 6.15 |
| Comparative Example 1 | 19.40 | 14.43 | × | 43 | 0.575 | 5.44 |
| Comparative Example 2 | 19.40 | 14.43 | × | 25 | 0.575 | 9.35 |
| Comparative Example 3 | 20.00 | 11.89 | × | 31 | 0.575 | 9.44 |
| Comparative Example 4 | 18.50 | 17.73 | × | 38 | 0.575 | 4.79 |
| Comparative Example 5 | 19.17 | 15.41 | × | 43 | 0.657 | 4.98 |
| Comparative Example 6 | 19.17 | 15.41 | × | 38 | 0.383 | 8.54 |

In Table 1 above, Equation (1)* represents a value calculated from $\dfrac{\dfrac{h}{r}}{\dfrac{W_{LiPF6}}{W_{EC}} \times W_{EL}} \times 100$ .

**Experimental Examples**

**Experimental Example 1. AC Resistance Evaluation**

After the secondary batteries respectively prepared in Examples 1, 3, 5, 6, and 8 and the secondary batteries respectively prepared in Comparative Examples 1 to 4 and 6 were subjected to formation while repeating two cycles (charge: 4.2 V CC, discharge: 2.5 V CC) at a current of 25 A (0.1 C) and 25°C, constant current/constant voltage (CC/CV) charging under conditions of 4.2 V and 8.33 A (0.3 C, 0.05 C cut-off) and CC discharging under conditions of 2.5 V and 8.33 A (0.3 C) were repeated three times. Thereafter, alternating current (AC) resistance was measured in a range of 1 kHz using a multi impedance analyzer (Biologic, model name: VMP3) at an SOC (State Of Charge) of 30% and a temperature of 25°C, and the results thereof are presented in Table 2 below.

**Experimental Example 2. DC Resistance (Direct Current Internal Resistance) Evaluation**

After formation was performed and cycles were repeated three times for the secondary batteries respectively prepared in Examples 1, 3, 5, 6, and 8 and the secondary batteries respectively prepared in Comparative Examples 1 to 4 and 6 in the same manner as in Experimental Example 1, each secondary battery was fully charged under conditions of 4.2 V and 8.33 A (0.3 C, 0.05 C cut-off) and then discharged to an SOC of 50% at room temperature, a voltage drop generated when discharged at a current of 0.5 C for 10 seconds was recorded, a DC resistance (DC-IR) value was measured using Ohm's law (R = V/I), and the results thereof are presented in Table 2 below.

[Table 2]

|  | ACIR (mOhm) | DCIR (mOhm) |
|---|---|---|
| Example 1 | 97 | 95 |
| Example 3 | 95 | 93 |
| Example 5 | 97 | 87 |
| Example 6 | 95 | 93 |
| Example 8 | 96 | 92 |
| Comparative Example 1 | 100 | 100 |
| Comparative Example 2 | 115 | 130 |
| Comparative Example 3 | 118 | 121 |
| Comparative Example 4 | 102 | 105 |
| Comparative Example 6 | 120 | 135 |

Referring to Table 2, with respect to the secondary batteries prepared in Examples 1, 3, 5, 6, and 8, since an increase in resistance was suppressed, it may be understood that cell performance was improved in comparison to that of the secondary batteries prepared in Comparative Examples 1 to 4 and 6.

That is, when comparing the cells of Examples 3, 6, and 8 with the cells of Comparative Examples 1 and 2, even in a case in which cell dimensions and electrolyte compositions were the same, with respect to the cells of Comparative Examples 1 and 2 in which the value, which was calculated from Equation (1) considering the amount of the electrolyte injected, deviated from the condition of the present disclosure, it may be understood that the cell performances were inferior because the resistances were increased in comparison to the cells of Examples 3, 6, and 8.

Also, when comparing the secondary battery prepared in Example 1 with the secondary battery prepared in Comparative Example 4, even in the case that the cell dimensions and the electrolyte compositions were the same, with respect to the cell of Comparative Example 4 in which the value, which was calculated from Equation (1) considering the amount of the lithium salt and ethylene carbonate included in the electrolyte, deviated from the condition of the present disclosure, it may be understood that the cell performance was inferior because the resistance was increased in comparison to the cell of Example 1.

Furthermore, when comparing the secondary battery prepared in Example 5 with the secondary battery prepared in Comparative Example 3, even in the case that the cell dimensions and the electrolyte compositions were the same, with respect to the cell of Comparative Example 3 in which the value, which was calculated from Equation (1) considering the amount of the lithium salt and ethylene carbonate included in the electrolyte, deviated from the condition of the present disclosure, it may be understood that the cell performance was inferior because the resistance was increased in comparison to the cell of Example 5.

With respect to the secondary battery of Comparative Example 6, even in the case that the cell dimension and the electrolyte composition were the same as those of Example 1, since wetting was reduced due to the insufficient amount of the electrolyte injected as the form factor ratio was outside the range of the present disclosure, it may be confirmed that the resistance was increased in comparison to the secondary batteries of the examples.

**Experimental Example 3.**

After each of the cells prepared in Examples 1 to 8 and Comparative Examples 1 to 6 was constant current-constant voltage charged at 1.0 C-rate to 4.2 V at room temperature (25°C) and then cut-off discharged at 0.5 C, initial capacity was measured.

Subsequently, constant current-constant voltage charging at 1.0 C-rate to 4.2 V at a high temperature (40°C) and then discharging at 0.2C C-rate to 2.5 V were set as one cycle, and 100 cycles of charging and discharging were performed. Capacity retention after 100 cycles at 40°C relative to the initial capacity after 1 cycle was measured, and the results thereof are then presented in Table 3 below.

[Table 3]

|  | Capacity retention after 100 cycles (%) |
|---|---|
| Example 1 | 95 |
| Example 2 | 98 |
| Example 3 | 93 |
| Example 4 | 97 |
| Example 5 | 96 |
| Example 6 | 93 |
| Example 7 | 95 |
| Example 8 | 94 |
| Comparative Example 1 | <80 |
| Comparative Example 2 | <80 |
| Comparative Example 3 | 90 |
| Comparative Example 4 | 85 |
| Comparative Example 5 | 89 |
| Comparative Example 6 | 87 |

Referring to Table 3, with respect to the lithium secondary batteries of Examples 1 to 8 of the present disclosure, it may be understood that capacity retentions after 100 cycles were significantly improved in comparison to those of the lithium secondary batteries of Comparative Examples 1 to 6.

Description of the Symbols

 10: Positive Electrode 11: Negative Electrode
 12: Separator 20: Current Collector
 21, 21a: Active Material Layer 22, 22a, 22c: Non-coating Portion
 24: Insulation Layer
 140, 170: Cylindrical-type Battery
 141: Jelly-Roll-Type Electrode Assembly
 142, 171: Battery Case
 143, 178: Sealing Body
 144: First Current Collecting Plate
 145, 176: Second Current Collecting Plate
 146a: Non-coating Portion of Positive Electrode Plate
 146b: Non-coating Portion of Negative Electrode Plate
 146: Insulator
 152: Venting Portion
 172: Rivet Terminal
 173: Second Gasket 178b: First Gasket

173a: Gasket Exposed Portion 173b: Gasket Insertion Portion
147, 180: Beading Portion 148: Crimping Portion
149: Lead 172a: Terminal Exposed Portion
173b: Terminal Insertion Portion 174: Insulating Cap

**Claims**

1. A lithium secondary battery comprising:

   a battery case; an electrode assembly accommodated in the battery case; and an electrolyte,
   wherein the electrode assembly comprises a positive electrode including a positive electrode active material, a separator, and a negative electrode including a negative electrode active material, and
   the electrolyte comprises $LiPF_6$ as a lithium salt, and ethylene carbonate as an organic solvent,
   wherein the lithium secondary battery has a ratio (form factor ratio) of a diameter (r) to a height (h) of the battery case of 0.4 or more, and satisfies a condition of Equation (1):

   [Equation (1)]

   $$5.6 \leq \frac{\frac{h}{r}}{\frac{W_{LiPF6}}{W_{EC}} \times W_{EL}} \times 100 \leq 8.6$$

   (In Equation (1), h is the height (mm) of the battery case,
   r is the diameter (mm) of the battery case,
   $W_{LiPF6}$ is an amount of the $LiPF_6$ which is expressed as a percentage (%) relative to a total weight of the electrolyte,
   $W_{EC}$ is an amount of the ethylene carbonate which is expressed as a percentage (%) relative to the total weight of the electrolyte, and
   $W_{EL}$ denotes the total weight (g) of the electrolyte included in the lithium secondary battery).

2. The lithium secondary battery of claim 1, wherein the lithium secondary battery is a cylindrical-type battery having the ratio (form factor ratio) of the diameter (r) to the height (h) of the battery case of 0.4 to **0.6.**

3. The lithium secondary battery of claim 1, wherein the lithium secondary battery is a 46110 cell, a 48110 cell, a 4880 cell, or a 4680 cell.

4. The lithium secondary battery of claim 1, wherein the lithium secondary battery comprises a non-coating portion in which an active material layer is not formed on at least a portion of the positive electrode and the negative electrode, and is a battery having a tab-less structure in which the non-coating portion of the positive electrode or the non-coating portion of the negative electrode is defined as an electrode tab.

5. The lithium secondary battery of claim 4, wherein the non-coating portion of the positive electrode and the non-coating portion of the negative electrode are formed along a winding direction of the electrode assembly on one side ends of the positive electrode and the negative electrode, respectively, a current collecting plate is bonded to each of the non-coating portion of the positive electrode and the non-coating portion of the negative electrode, and the current collecting plate is connected to an electrode terminal.

6. The lithium secondary battery of claim **5,** wherein the non-coating portion of the positive electrode and the non-coating portion of the negative electrode are processed in a form of a plurality of independently bendable segments, and at least a portion of the plurality of segments is bent toward a winding center of the electrode assembly.

7. The lithium secondary battery of claim **6,** wherein the at least a portion of the plurality of segments that is bent is overlapped on an upper end and a lower end of the electrode assembly, and the current collecting plate is bonded to the overlapped plurality of segments.

8. The lithium secondary battery of claim 1, wherein the positive electrode active material is a lithium transition metal oxide containing nickel (Ni) and cobalt (Co),

   wherein the lithium transition metal oxide satisfies Equation (2):

$$\text{Equation (2):}$$

$$18 \leq X_{Ni}/X_{Co} \leq 48$$

   (In Equation (2), $X_{Ni}$ is a mole% of Ni among total metals excluding lithium in the lithium transition metal oxide, and $X_{Co}$ is a mole% of Co among the total metals excluding lithium in the lithium transition metal oxide).

9. The lithium secondary battery of claim 8, wherein the lithium transition metal oxide is represented by [Formula 1].

   [Formula 1]        $Li_aNi_bCo_cM^1_dM^2_eO_2$

   wherein, in Formula 1,
   $M^1$ is manganese (Mn), aluminum (Al), or a combination thereof, $M^2$ is at least one selected from the group consisting of zirconium (Zr), tungsten (W), yttrium (Y), barium (Ba), calcium (Ca), titanium (Ti), magnesium (Mg), tantalum (Ta), and niobium (Nb), and $0.8 \leq a \leq 1.2$, $0.85 < b < 1$, $0 < c < 0.06$, $0 < d < 0.15$, and $0 \leq e \leq 0.1$.

10. The lithium secondary battery of claim 9, wherein the lithium transition metal oxide is $Li(Ni_{0.90}Mn_{0.05}Co_{0.05})O_2$, $Li(Ni_{0.94}Co_{0.04}Mn_{0.02})O_2$, $Li(Ni_{0.87}Mn_{0.07}Co_{0.04}Al_{0.02})O_2$, or $Li(Ni_{0.90}Mn_{0.03}Co_{0.05}Al_{0.02})O_2$.

11. The lithium secondary battery of claim 1, wherein the negative electrode active material is a mixture of a carbon-based negative electrode active material and a silicon-based negative electrode active material, and
    the carbon-based negative electrode active material and the silicon-based negative electrode active material are included in a weight ratio of 95:5 to 99:1.

12. A battery pack comprising the lithium secondary battery of any one of claims 1 to 11.

WINDING DIRECTION

11　10　12

Z

X

FIG.1

22
20
21

Z

Y

X

FIG.2

FIG.3

FIG.4

FIG.5

FIG.6

## INTERNATIONAL SEARCH REPORT

| International application No. |
| --- |
| **PCT/KR2024/010489** |

**A.  CLASSIFICATION OF SUBJECT MATTER**

**H01M 10/0525**(2010.01)i; **H01M 10/0587**(2010.01)i; **H01M 4/525**(2010.01)i; **H01M 4/38**(2006.01)i; **H01M 4/583**(2010.01)i; **H01M 4/36**(2006.01)i

According to International Patent Classification (IPC) or to both national classification and IPC

**B.  FIELDS SEARCHED**

Minimum documentation searched (classification system followed by classification symbols)

H01M 10/0525(2010.01); H01M 2/16(2006.01); H01M 4/38(2006.01); H01M 50/107(2021.01); H01M 50/213(2021.01); H01M 50/451(2021.01); H01M 50/533(2021.01); H01M 50/538(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차 전지(secondary battery), LiPF6, 에틸렌 카보네이트(ethylene carbonate), 폼 팩터 비(form factor ratio), 무지부(non-coated portion), 탭-리스(tab-less)

**C.  DOCUMENTS CONSIDERED TO BE RELEVANT**

| Category* | Citation of document, with indication, where appropriate, of the relevant passages | Relevant to claim No. |
| --- | --- | --- |
| X | KR 10-2023-0058304 A (LG ENERGY SOLUTION, LTD.) 03 May 2023 (2023-05-03)<br>See paragraphs [0081], [0105]-[0107], [0196]-[0201], [0223], [0232]-[0237] and [0240]-[0244]; and figure 1. | 1-12 |
| A | KR 10-2023-0069974 A (VARTA MICROBATTERY GMBH) 19 May 2023 (2023-05-19)<br>See entire document. | 1-12 |
| A | KR 10-2023-0021584 A (LG ENERGY SOLUTION, LTD.) 14 February 2023 (2023-02-14)<br>See entire document. | 1-12 |
| A | US 10424779 B1 (GOOGLE LLC) 24 September 2019 (2019-09-24)<br>See entire document. | 1-12 |
| A | KR 10-2023-0070167 A (LG ENERGY SOLUTION, LTD.) 22 May 2023 (2023-05-22)<br>See entire document. | 1-12 |

☑ Further documents are listed in the continuation of Box C.    ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **04 November 2024** | **04 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 629 379 A1**

## INTERNATIONAL SEARCH REPORT

<table>
<tr><td colspan="2">International application No.</td></tr>
<tr><td colspan="2">**PCT/KR2024/010489**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| PX | KR 10-2024-0100285 A (LG ENERGY SOLUTION, LTD.) 01 July 2024 (2024-07-01) See paragraphs [0232], [0235]-[0237] and [0320]-[0324]; claims 1, 5-8, 14-16 and 18; and table 5. | 1-12 |
| PX | KR 10-2024-0100156 A (LG ENERGY SOLUTION, LTD.) 01 July 2024 (2024-07-01) See paragraphs [0205], [0210] and [0282]; claims 1, 3, 5-8, 13-15 and 17; and table 1. | 1-12 |

Form PCT/ISA/210 (second sheet) (July 2022)

# EP 4 629 379 A1

## INTERNATIONAL SEARCH REPORT
### Information on patent family members

| International application No. |
| --- |
| **PCT/KR2024/010489** |

| Patent document cited in search report | | | Publication date (day/month/year) | Patent family member(s) | | | Publication date (day/month/year) |
| --- | --- | --- | --- | --- | --- | --- | --- |
| KR | 10-2023-0058304 | A | 03 May 2023 | CN | 116806373 | A | 26 September 2023 |
| | | | | EP | 4386887 | A1 | 19 June 2024 |
| | | | | JP | 2024-509211 | A | 29 February 2024 |
| | | | | WO | 2023-068900 | A1 | 27 April 2023 |
| KR | 10-2023-0069974 | A | 19 May 2023 | CN | 115552677 | A | 30 December 2022 |
| | | | | CN | 115606028 | A | 13 January 2023 |
| | | | | CN | 115668564 | A | 31 January 2023 |
| | | | | CN | 115702517 | A | 14 February 2023 |
| | | | | CN | 115803926 | A | 14 March 2023 |
| | | | | CN | 115836421 | A | 21 March 2023 |
| | | | | CN | 115836422 | A | 21 March 2023 |
| | | | | CN | 116057749 | A | 02 May 2023 |
| | | | | CN | 116569372 | A | 08 August 2023 |
| | | | | CN | 117501493 | A | 02 February 2024 |
| | | | | EP | 3916827 | A1 | 01 December 2021 |
| | | | | EP | 3916828 | A1 | 01 December 2021 |
| | | | | EP | 3916829 | A1 | 01 December 2021 |
| | | | | EP | 3916841 | A1 | 01 December 2021 |
| | | | | EP | 3916841 | B1 | 14 September 2022 |
| | | | | EP | 3916868 | A1 | 01 December 2021 |
| | | | | EP | 3916869 | A1 | 01 December 2021 |
| | | | | EP | 3916870 | A1 | 01 December 2021 |
| | | | | EP | 3916877 | A1 | 01 December 2021 |
| | | | | EP | 3965196 | A1 | 09 March 2022 |
| | | | | EP | 4135088 | A1 | 15 February 2023 |
| | | | | EP | 4158712 | A1 | 05 April 2023 |
| | | | | EP | 4158712 | B1 | 24 April 2024 |
| | | | | EP | 4158713 | A1 | 05 April 2023 |
| | | | | EP | 4162554 | A1 | 12 April 2023 |
| | | | | EP | 4169105 | A1 | 26 April 2023 |
| | | | | EP | 4197051 | A1 | 21 June 2023 |
| | | | | JP | 2023-527842 | A | 30 June 2023 |
| | | | | JP | 2023-528019 | A | 03 July 2023 |
| | | | | JP | 2023-529881 | A | 12 July 2023 |
| | | | | JP | 2023-530349 | A | 14 July 2023 |
| | | | | JP | 2023-535470 | A | 17 August 2023 |
| | | | | JP | 2023-537122 | A | 30 August 2023 |
| | | | | JP | 2023-540557 | A | 25 September 2023 |
| | | | | JP | 2023-542123 | A | 05 October 2023 |
| | | | | JP | 2023-550814 | A | 05 December 2023 |
| | | | | JP | 2024-530565 | A | 23 August 2024 |
| | | | | KR | 10-2023-0019122 | A | 07 February 2023 |
| | | | | KR | 10-2023-0019440 | A | 08 February 2023 |
| | | | | KR | 10-2023-0023718 | A | 17 February 2023 |
| | | | | KR | 10-2023-0027162 | A | 27 February 2023 |
| | | | | KR | 10-2023-0047419 | A | 07 April 2023 |
| | | | | KR | 10-2023-0049695 | A | 13 April 2023 |
| | | | | KR | 10-2023-0066064 | A | 12 May 2023 |
| | | | | KR | 10-2023-0113320 | A | 28 July 2023 |
| | | | | KR | 10-2024-0006681 | A | 15 January 2024 |

Form PCT/ISA/210 (patent family annex) (July 2022)

**EP 4 629 379 A1**

**INTERNATIONAL SEARCH REPORT**
Information on patent family members

| International application No. |
|---|
| **PCT/KR2024/010489** |

| Patent document cited in search report | | | Publication date (day/month/year) | Patent family member(s) | | | Publication date (day/month/year) |
|---|---|---|---|---|---|---|---|
| | | | | US | 2023-0207833 | A1 | 29 June 2023 |
| | | | | US | 2023-0223551 | A1 | 13 July 2023 |
| | | | | US | 2023-0223658 | A1 | 13 July 2023 |
| | | | | US | 2023-0238569 | A1 | 27 July 2023 |
| | | | | US | 2023-0275331 | A1 | 31 August 2023 |
| | | | | US | 2023-0291080 | A1 | 14 September 2023 |
| | | | | US | 2023-0307802 | A1 | 28 September 2023 |
| | | | | US | 2023-0420800 | A1 | 28 December 2023 |
| | | | | US | 2024-0006654 | A1 | 04 January 2024 |
| | | | | US | 2024-0283100 | A1 | 22 August 2024 |
| | | | | WO | 2021-239490 | A1 | 02 December 2021 |
| | | | | WO | 2021-239492 | A1 | 02 December 2021 |
| | | | | WO | 2021-249808 | A1 | 16 December 2021 |
| | | | | WO | 2021-255238 | A1 | 23 December 2021 |
| | | | | WO | 2022-023321 | A1 | 03 February 2022 |
| | | | | WO | 2022-034156 | A1 | 17 February 2022 |
| | | | | WO | 2022-048969 | A1 | 10 March 2022 |
| | | | | WO | 2022-058342 | A1 | 24 March 2022 |
| | | | | WO | 2022-111932 | A1 | 02 June 2022 |
| | | | | WO | 2023-016769 | A1 | 16 February 2023 |
| KR | 10-2023-0021584 | A | 14 February 2023 | CN | 115706233 | A | 17 February 2023 |
| | | | | CN | 218414640 | U | 31 January 2023 |
| | | | | EP | 4290674 | A1 | 13 December 2023 |
| | | | | JP | 2024-512489 | A | 19 March 2024 |
| | | | | US | 2024-0145783 | A1 | 02 May 2024 |
| | | | | WO | 2023-014018 | A1 | 09 February 2023 |
| US | 10424779 | B1 | 24 September 2019 | | None | | |
| KR | 10-2023-0070167 | A | 22 May 2023 | CN | 117981158 | A | 03 May 2024 |
| | | | | EP | 4391194 | A1 | 26 June 2024 |
| | | | | WO | 2023-085893 | A1 | 19 May 2023 |
| KR | 10-2024-0100285 | A | 01 July 2024 | WO | 2024-136549 | A1 | 27 June 2024 |
| KR | 10-2024-0100156 | A | 01 July 2024 | | None | | |

Form PCT/ISA/210 (patent family annex) (July 2022)

**REFERENCES CITED IN THE DESCRIPTION**

**Patent documents cited in the description**

- KR 1020230093983
- KR 1020240095334

**Non-patent literature cited in the description**

- **SEONG JIN AN et al.** *J. Electrochem. Soc.*, 2017, vol. 164, A1195